# EUROPÄISCHE PATENTSCHRIFT

(11) **EP 1 027 788 B1**
(45) Veröffentlichungstag und Bekanntmachung des Hinweises auf die Patenterteilung: **04.02.2004**
(21) Anmeldenummer: 98956814.2
(22) Anmeldetag: 20.10.1998
(51) Int. Cl.: H04L 12/28, H04L 12/26, H04Q 7/34, H04Q 7/38

(54) **VERFAHREN UND ANORDNUNG ZUR ÜBERTRAGUNG VON DATEN ÜBER EINE FUNKSCHNITTSTELLE IN EINEM FUNK-KOMMUNIKATIONSSYSTEM**
METHOD AND ARRANGEMENT FOR TRANSMITTING DATA OVER A RADIO INTERFACE IN A RADIOCOMMUNICATIONS SYSTEM
PROCEDE ET DISPOSITIF DE TRANSFERT DE DONNEES PAR UNE INTERFACE RADIO DANS UN SYSTEME DE RADIOCOMMUNICATIONS

(30) Priorität: 27.10.1997 DE 19747367
(43) Veröffentlichungstag der Anmeldung: 16.08.2000
(73) Patentinhaber: SIEMENS AKTIENGESELLSCHAFT, 80333 München (DE)
(72) Erfinder: RITTER, Gerhard, D-86943 Thaining (DE)
(86) Internationale Anmeldenummer: PCT/DE1998/003064
(87) Internationale Veröffentlichungsnummer: WO 1999/022527

(56) Entgegenhaltungen:
- EP-A- 0 519 891
- EP-A- 0 715 440
- EP-A- 0 767 557
- EP-A- 0 767 594
- WO-A-96/27975
- WO-A-96/35306
- WO-A-97/08861
- US-A- 4 233 473
- US-A- 4 688 210
- US-A- 4 765 753
- US-A- 4 949 395
- US-A- 5 182 753
- US-A- 5 381 443
- US-A- 5 548 812
- US-A- 5 584 049
- US-A- 5 594 720
- US-A- 5 598 417
- US-A- 5 642 354
- US-A- 5 655 003

## Beschreibung

Die Erfindung betrifft ein Verfahren und eine Anordnung zur Übertragung von Daten über eine Funkschnittstelle in einem Funk-Kommunikationssystem, insbesondere in einem Mobilfunksystem.

In Funk-Kommunikationssystemen werden Nachrichten (beispielsweise Sprache, Bildinformation oder andere Daten) mit Hilfe von elektromagnetischen Wellen übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen im Bereich von 900 MHz. Für zukünftige Funk-Kommunikationssysteme, beispielsweise das UMTS (Universal Mobile Telecommunication System) oder andere Systeme der 3. Generation sind Frequenzen im Frequenzband von ca. 2 GHz vorgesehen.

Die abgestrahlten elektromagnetischen Wellen werden aufgrund von Verlusten durch Reflexion, Beugung und Abstrahlung infolge der Erdkrümmung und dergleichen gedämpft. Infolgedessen sinkt die Empfangsleistung, die bei der empfangenden Funkstation zur Verfügung steht. Diese Dämpfung ist ortsabhängig und bei sich bewegenden Funkstationen auch zeitabhängig.

Zwischen einer sendenden und einer empfangenden Funkstation besteht eine Funkschnittstelle, über die mit Hilfe der elektromagnetischen Wellen eine Datenübertragung stattfindet. Eine Teilnehmerseparierungs erfolgt bei dem GSM-Mobilfunksystem nach einem Zeitmultiplexverfahren, dem sogenannten TDMA-Verfahren (Time Division Multiple Access), welches in einer Kombination mit einem Frequenzmultiplexverfahren FDMA-(Frequency Division Multiple Access) verwendet wird.

In dem GSM-Mobilfunksystem, wie es unter anderem aus J. Biala, "Mobilfunk und intelligente Netze", Vieweg Verlag, 1995, insbesondere den Seiten 80 und 269, sowie aus P. Smolka "GSM-Funkschnittstelle - Elemente und Funktionen", telekom praxis, Nr. 4/93, S. 17 bis 24, insbesondere den Bildern 4 und 5, bekannt ist, ist ein TDMA-Rahmen in 8 Zeitschlitze unterteilt. Daten von Kommmunikationsverbindungen bzw. Signalisierungsinformationen werden als Funkblöcke, sogenannte Burst, in den Zeitschlitzen übertragen, wobei innerhalb eines Funkblockes Mittambeln mit bekannten Symbolen übertragen werden. Diese Mittambeln können im Sinne von Trainingssequenzen zum empfangsseitigen Abstimmen der Funkstation genutzt werden. Die empfangende Funkstation führt anhand der Mittambeln eine Schätzung der Kanalimpulsantworten für verschiedene Übertragungskanäle durch. Da die Übertragungseigenschaften des Mobilfunkkanals orts- und frequenzabhängig sind, kann die empfangende Funkstation mittels dieser Trainingssequenz eine Entzerrung des Empfangssignals vornehmen.

Das in dem GSM-Mobilfunksystem verwendete TDMA-Teilnehmerseparierungsverfahren ist für die Übertragung von Informationen mit einer relativ niedrigen Datenrate entwickelt und dimensioniert worden. Es besitzt zudem eine nur sehr eingeschränkte Flexibilität bei der Zuteilung von Datenraten zu einem Teilnehmer.

In zukünftigen Funk-Kommunikationssystemen und insbesondere den Mobilfunksystemen der dritten Generation sind jedoch hohe Datenraten und eine individuelle, flexible Zuteilung von Übertragungskapazitäten zu Kommunikationsverbindungen gewünscht. Weiterhin soll auch zu einem Mischbetrieb verschiedener Dienste und Datenraten, sowie zu einer Unsymmetrie der Datenraten und des Verkehrsaufkommens, wie beispielsweise bei Internet-Anwendungen für die Abwärts- und Aufwärtsstrecke unterstützt werden.

Aus der WO 97 08861 ist eine Anordnung und ein Verfahren zur bidirektionalen Übertragung von digitalen Daten über unterschiedliche Übertragungsmedien bekannt. Dabei werden Daten mehrerer Quellen einem Zeitmultiplex in Zeitschlitze sowie einer Kodierung mittels orthogonaler Kodes unterworfen. Die kodierten Daten werden in Rahmen zwischen zentralen und abgesetzten Einheiten übertragen, wobei die Rahmen mittels einer Übertragungslücke ohne Daten synchronisiert werden.

Aus der EP 0 767 557 A1 ist eine Zeitrahmen- und Zeitschlitzstruktur basierend auf einem bekannten TDMA-Teilnehmerseparierungsverfahren, wie es in dem vorangehend beschriebenen GSM-Mobilfunksystem eingesetzt wird, bekannt. Dabei ist eine Trainingssequenz in einen Zeitschlitz eingebettet und von zwei Datenblöcken umgeben.

Der Erfindung liegt die Aufgabe zugrunde, ein Verfahren und eine entsprechende Anordnung für eine flexible und dynamisch konfigurierbare Zeitmultiplexstruktur zur Datenübertragung in der Abwärtsrichtung anzugeben.

Diese Aufgabe wird gemäß der Erfindung nach den Merkmalen des Patentanspruches 1 bezüglich des Verfahrens und nach den Merkmalen des Patentanspruches 9 bezüglich der Anordnung erfüllt. Vorteilhafte Weiterbildungen der Erfindung sind den Unteransprüchen zu entnehmen.

Die Erfindung betrifft ein Verfahren und eine Basisstation zur Übertragung von Daten in Abwärtsrichtung über eine Funkschnittstelle in einem Funk-Kommunikationssystem. Dabei sendet eine Basisstation die Daten von zumindest einer Kommunikationsverbindung gemäß einem Zeitmultiplex-Verfahren in Funkblöcken in Abwärtsrichtung zu einer Funkstation. Innerhalb eines Zeitrahmens werden periodisch Trainingssequenzen gesendet, und nach einer jeweiligen Trainingssequenz wird der Funkblock zumindest einer der Kommunikationsverbindungen gesendet. Dabei werden die Trainingssequenzen mit einer im Vergleich zu einer mittleren Sendeleistung für die Funkblöcke höheren und konstanten Sendeleistung gesendet.

Dieses erfindungsgemäße Verfahren besitzt den Vorteil, daß die Zeiten für das Ein- und Ausschalten des Senders sowie für das Ausschwingen der Übertragungskanäle entfallen, wodurch der genutzte zeitliche Anteil für die Übertragung von Daten erhöht werden kann. Als weiteren Vorteil gestattet dieses Verfahren, daß die Änderungen der Übertragungseigenschaften auf der Funkstrecke fortlaufend durch die Funkstation festgestellt werden können und diese eine Entzerrung der Empfangssignale durchführen kann, so daß beispielsweise eine Übertragung von Daten auch bei höheren Geschwindigkeiten der als eine Mobilstation eines Mobilfunksystems ausgestalteten Funkstation ermöglicht wird.

In einer ersten Ausgestaltung der Erfindung führt die Funkstation eine Inter- und/oder Extrapolation der Kanalschätzung aus zumindest zwei Trainingssequenzen durch. Die Inter- und/oder Extrapolation erfolgt dabei für alle zeitlich auflösbaren Komponenten der bei der Übertragung auf der Funkschnittstelle auftretenden Mehrwegeverzögerung. Diese Ausgestaltung besitzt den Vorteil, daß die zeitliche Variation der Ubertragungseigenschaften über die Funkblöcke mit den für die Funkstation bestimmten Daten nachgeführt werden kann, wobei durch die Extrapolation von der emmpfangenen Funkstation auch begrenzte Voraussagen über zukünftige Übertragungseigenschaften auf der Funkstrecke gemacht werden können. Bei zwei oder mehr Trainingssequenzen ist eine lineare Interpolation und/oder Extrapolation möglich, wohingegen bei drei Trainingssequenzen pro Zeitschlitz eine quadratische Interpolation und/oder Extrapolation durchgeführt werden können.

Eine vorteilhafte Nachführung der Entzerrung der Empfangssignale kann auch permanent durch die Funkstation erfolgen, bei dem diese Kanalschätzungen auf der Basis aller von der Basisstation gesendeten Trainingssequenzen durchführt und durch eine Inter- und/oder Extrapolation die sich verändernden Übertragungseigenschaften auf der Funkstrecke feststellt.

In einer zweiten Ausgestaltung der Erfindung werden die Trainingssequenzen auf der Seite der sendenden Basisstation mit einer, im Vergleich zur mittleren Sendeleistung für die Daten, größeren, konstanten Sendeleistung gesendet. Durch diese Ausgestaltung kann die Funkstation exakte Kanalschätzungen über die Übertragungseigenschaften unabhängig von dem Aufenthaltsort und der Leistungsregelung für weitere Funkstationen, deren Daten in dem gleichen oder in weiteren Funkblöcken zwischen den Trainingssequenzen übertragen werden, durchführen. Weiterhin ergibt sich durch die größere Sendeleistung eine Verbesserung des mittleren Signal-Stör-Verhältnisses beim Empfang der Trainingssequenzen in der Funkstation.

In einer weiteren Ausführung der Erfindung werden Daten einer ersten Kommunikationsverbindung zu der Funkstation und von weiteren Kommunikationsverbindungen zu weiteren Funkstationen in einem Funkblock zusammengefaßt. Diese Ausgestaltung gestattet eine flexible Zuteilung der Übertragungskapazität auf der Übertragungsstrecke zu den einzelnen Kommunikationsverbindungen gegenüber der starren Zuteilung jeweils einer Kommunikationsverbindung zu einem Funkblock, der in einem Intervall zwischen zwei Trainingssequenzen übertragen wird.

Weiterhin kann dabei gemäß einer Weiterbildung dieser Ausführung vorteilhaft die Anzahl der Daten jeweils der ersten und der weiteren Kommunikationsverbindungen innerhalb des Funkblockes in Abhängigkeit von der benötigten Übertragungskapazität variiert werden. Dieses ermöglicht eine Flexibilisierung und Dynamisierung der Zuteilung von Datenraten zu den einzelnen Kommunikationsverbindungen, wodurch beispielsweise auch ein Mischbetrieb unterschiedlicher Dienste mit unterschiedlichen Datenraten oder aber auch ein Mischbetrieb von paketorientierten und verbindungsorientierten Diensten ermöglicht wird.

Zusätzlich können bei einer derartigen flexiblen und dynamischen Zuteilung von Übertragungskapazitäten zu Kommunikationsverbindungen die bei Übertragungspausen während der ersten Kommunikationsverbindung nicht verwendete Übertragungskapazität dynamisch von einer oder mehreren weiteren Kommunikationsverbindungen zur Übertragung von Daten genutzt werden, wodurch die effektive Übertragungskapazität auf der Funkstrecke weiter vorteilhaft erhöht wird.

Eine weitere Erhöhung der Übertragungskapazität oder des Fehlerschutzes kann gemäß einer weiteren Ausgestaltung der Erfindung auch durch eine Verkürzung der Trainingssequenzen im Vergleich zu einer auf eine übliche Mehrwegeausbreitung ausgelegten Trainingssequenz erreicht werden. Dieses kann beispielsweise in Abhängigkeit von der Größe der Funkzelle oder bei nur wenigen Obstakel auf der Funkstrecke durchgeführt werden, wodurch der Delay-Spread, d.h. die größt mögliche Verzögerungszeit, mit der ein Datum bei einer Mehrwegeausbreitung von der empfangenden Funkstation eindeutig empfangen werden kann, deutlich verringert wird. Die freiwerdende Übertragungskapazität kann wiederum zusätzlich für die Übertragung der Daten oder für den Fehlerschutz verwendet werden.

In weiteren Ausgestaltungen der Erfindung werden die Daten der ersten Kommunikationsverbindung mit jeweils einem oder mehreren Kodes für unterschiedliche Datenabschnitte versehen. Als Kode kann dabei ein Walsh-Kode verwendet werden, der sich aufgrund seiner Orthogonalität und der einfachen Verarbeitung der kodierten Signale sehr gut eignet.

Eine Kodefolge wird mit der Amplitude und der Phase eines Datums einer Kommunikationsverbindung beaufschlagt, wodurch mehrere Kodefolgen, die jeweils unterschiedlichen Kommunikationsverbindungen zugeordnet sind, gleichzeitig übertragen werden können. Die Summe der jeweiligen diskreten Zeitwerte wird anschließend zur Modulation der zu übertragenen Grundimpulse verwendet. Auf der Empfangsseite werden die einzelnen empfangenen Grundimpulse bestimmt und die orthogonalen Kodefolgen durch eine Kode-Transformation wieder getrennt. Der Vorteil der Kodierung gegenüber einer direkten Übertragung der Informationen als isolierte Daten (Grundimpulse) besteht darin, daß sich eine Mittelung der Störungen über die Länge der Kodefolgen ergibt. Für die Modulation der Daten können bekannte Modulationsformen wie beispielsweise BPSK, QPSK usw. verwendet werden.

Werden die Grundimpulse von der Basisstation mit einem festen Grundimpulsfolgetakt gesendet, so kann die Funkstation diese Grundimpulse gemäß einer weiteren Ausgestaltung mittels eines diskontinuierlichen Transversalfilters empfangen und auswerten. Durch den Einsatz eines diskontinuierlichen Transversalfilters lassen sich auch die Grundimpulse einer oder mehrerer störender Basisstationen in der Umgebung der Funkstation eliminieren. Dieses erlaubt in einer zellularen Umgebung eine erhebliche Verbesserung des Signal-Stör-Verhältnisses am Ort der Funkstation.

Das diskontinuierliche Transversalfilter ermöglicht eine aufwandsgünstige Realisierung einer Empfangseinrichtung. Abhängig von der Dimensionierung und dem Aufwand, der bei der Transversalfilterung betrieben wird, werden durch das Verfahren bisher nur näherungsweise berücksichtigte Übertragungsverzerrungen wesentlich besser ausgeglichen.

Für die Übertragung können prinzipiell beliebige Grundimpulse wie beispielsweise gaussförmige- oder zeitlich begrenzte sin(x)/x-förmige Grundimpulse bzw. bandbreitenerhöhende Grundimpulse, die im einfachsten Fall aus einer Folge von einfachen Grundimpulsen aufgebaut sind, eingesetzt werden.

Ausführungsbeispiele der Erfindung werden anhand der beiliegenden Zeichnungen näher erläutert.

Dabei zeigen
- FIG 1: ein Blockschaltbild eines Funk-Kommunikationssystems, insbesondere eines Mobilfunksystems,
- FIG 2: ein Blockschaltbild einer Funkstation mit darin verwirklichten Komponenten für den Empfangspfad,
- FIG 3: ein Blockschaltbild eines diskontinuierlichen Transversalfilters,
- FIG 4: eine schematische Darstellung einer Struktur eines Zeitmultiplex-Verfahrens,
- FIG 5: eine schematische Darstellung einer erfindungsgemäßen Rahmenstruktur eines Zeitmultiplex-Verfahrens,
- FIG 6: eine schematische Darstellung einer erfindungsgemäßen Rahmenstruktur,
- FIG 7: eine schematische Darstellung einer erfindungsgemäßen Rahmenstruktur.

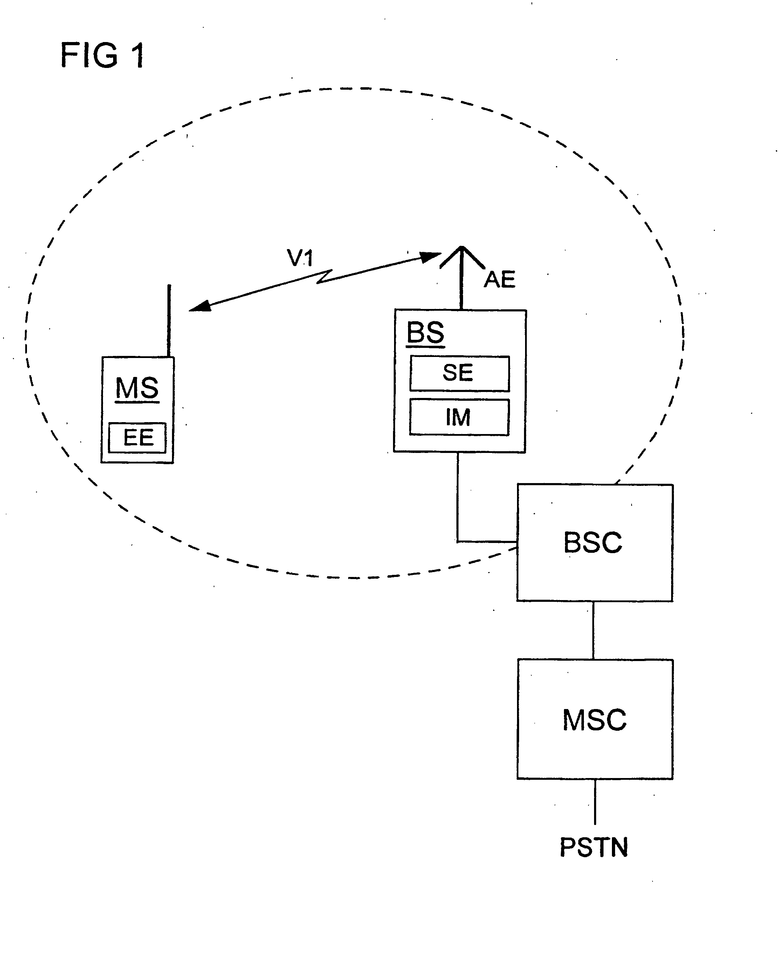

Das in FIG 1 dargestellte Funk-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einer Basisstations-Steuerung BSC verbunden. Jede Basisstations-Steuerung BSC ermöglicht wiederum eine Verbindung zu zumindest einer Basisstation BS. Diese Basisstationen BS ist eine Funkstation, die über eine Funkschnittstelle Kommunikationsverbindungen zu Funkstationen MS aufbauen kann. Die Funktionalität dieser Struktur wird von dem Funk-Kommunikationssystem nach der Erfindung genutzt.

In FIG 1 ist beispielhaft eine erste Kommunikationsverbindung V1 zur Übertragung von Nutzdaten und Signalisierungsinformationen zwischen einer mobilen Funkstation MS und einer Basisstation BS dargestellt. Die Basisstation BS ist mit einer Antenneneinrichtung AE verbunden, die z.B. aus drei Einzelstrahlern besteht. Jeder der Einzelstrahler strahlt gerichtet in einen Sektor der durch die Basisstation BS versorgten Funkzelle. Es können jedoch alternativ auch eine größere Anzahl von Einzelstahlern (gemäß adaptiver Antennen) eingesetzt werden, so daß auch eine räumliche Teilnehmerseparierung nach einem SDMA-Verfahren (Space Division Multiple Access) eingesetzt werden kann.

In der Basisstation BS ist eine Sendeeinrichtung SE zum Senden von Daten d zu der Funkstation MS und Mittel IM zum Einfügen von wiederkehrenden Trainingssequenzen tseq zwischen Funkblöcken fb mit den Daten d verwirklicht. In der Funkstation MS ist hingegen eine Empfangseinrichtung EE verwirklicht, mittels der diese anhand der Trainingssequenzen tseq eine Kanalschätzung durchführt.

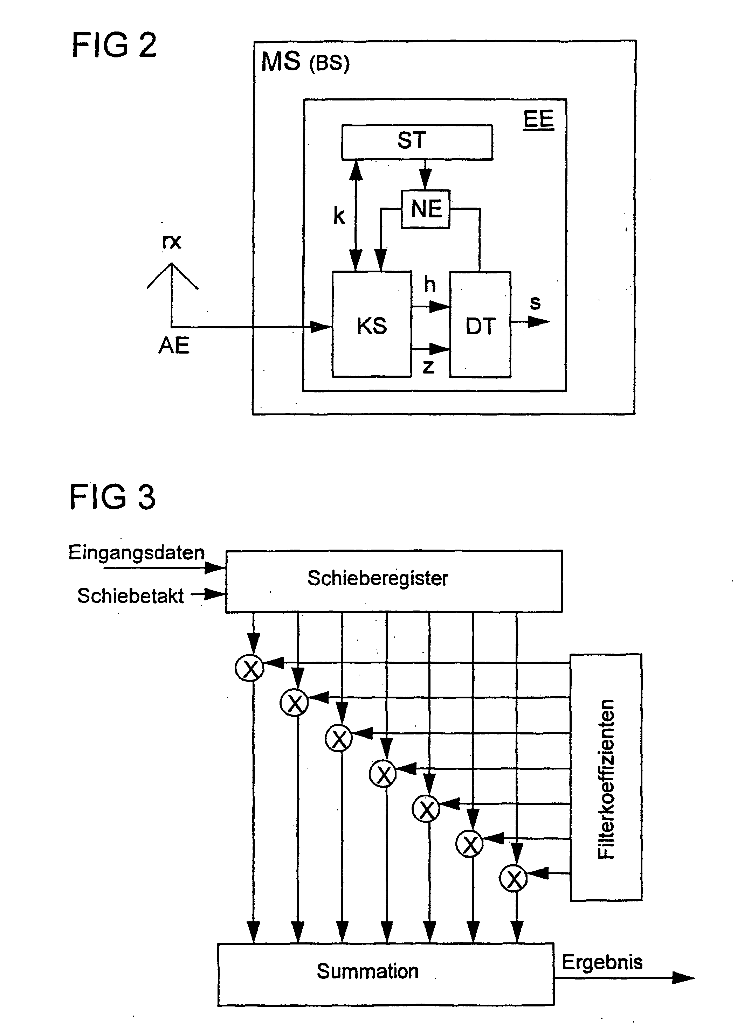

Der beispielhafte Aufbau der Funkstation MS ist in der FIG 2 dargestellt, wobei nur die für den Empfangspfad relevanten Komponenten in der Empfangseinrichtung EE dargestellt sind. Es besteht üblicherweise jedoch eine zweiseitige Verkehrsbeziehung, d.h. die Basis- BS und die Funkstation MS weisen gleichsam jeweils eine Empfangseirichtung EE und eine Sendeeinrichtung SE zum Senden der Daten d auf.

Über eine Antenneneinrichtung AE werden Empfangssignale rx, die durch Mehrwegeausbreitung, Störung und Verzögerung beeinträchtigt eintreffen, empfangen und der Empfangseinrichtung EE zugeführt. Aus den Empfangssignalen rx werden in der Empfangseinrichtung EE, z.B. durch eine Übertragung ins Basisband und eine darauffolgende Analog/Digitalwandlung, digitale Signale erzeugt, die einem Kanalschätzer KS zugeführt werden. Der Kanalschätzer KS ist mit einem Detektor DT verbunden und führt diesem aus den digitalen Empfangssignalen rx abgeleitete Antennendaten z und im Kanalschätzer KS bestimmte Kanalkoeffizienten h zu. Der Detektor DT, der beispielsweise als Viterbi-Detektor ausgebildet ist, nimmt eine Entzerrung und Datendetektion der Antennendaten z unter Zuhilfenahme der Kanalkoeffizienten h vor und erzeugt Symbole s, die weiteren Einrichtungen der Empfangseinrichtung EE zugeführt werden (nicht eingezeichnet). In diesen weiteren Einrichtungen wird daraufhin eine Dekodierung und gegebenenfalls weitere Verarbeitungsvorgänge ausgeführt. Die Symbole s repräsentieren die rekonstruierten Signale der Sendeseite.

Eine Steuereinrichtung ST ist mit dem Kanalschätzer KS verbunden und wertet bei der Kanalschätzung erzeugte Korrelationswerte k aus, die die Grundlage zur Bestimmung der Kanalkoeffizienten h bilden. Abhängig von dieser Auswertung wird die Kanalschätzung in der Weise gesteuert, daß vom Detektor DT ermittelte Werte über eine Nachführeinheit NE wahlweise in die Kanalschätzung einbezogen werden.

Die Sendereinrichtung SE in der Basisstation BS überträgt modulierte Grundimpulse über einen Übertragungskanal zu der Empfängeranordnung EE, die Systemgrundimpulsantworten bestimmt und in einer Signalverarbeitung die in der Modulation enthaltenen Daten d detektiert.

Die Sendereinrichtung besteht aus einem Kodierer, einem Grundimpulsgenerator, einem Leistungsverstärker und einer Ankoppelung an das Übertragungsmedium. Die Sendeeinrichtung SE erzeugt Grundimpulse mit einem bestimmten Grundimpulsfolgetakt, die über einen Leistungsverstärker an die Antenneeinheit AE weitergegeben werden. In einem Kodierer wird abhängig von den zu übertragenden Daten d ausgewählt, welcher Grundimpuls, aus einem Vorrat von verfügbaren Grundimpulsen, ausgesandt wird und mit welchem Modulationsfaktor dieser Grundimpuls modifiziert wird.

Unterschiedliche Übertragungsverfahren unterscheiden sich im Vorrat an Grundimpulsen. Es können dabei eine oder mehrere Grundimpulse verwendet werden. Diese Grundimpulse können in ihrer zeitlichen Ausdehnung beliebig sein und sind nicht auf die Zeitdauer des Grundimpulsfolgetaktes festgelegt.

Im Empfänger erfolgt die folgende Signalverarbeitung: Verstärkung, Frequenzumsetzung, analoge Filterung, A/D-Umsetzung und digitale Filterung. Am Ausgang der digitalen Filterung ergibt sich eine Folge von Systemgrundimpulsantworten im Takt des Grundimpulsfolgetaktes. Diese Folge überlagerter Systemgrundimpulsantworten wird der Signalverarbeitung und Detektion zugeführt.

In der empfangsseitigen Signalverarbeitung erfolgt die Bestimmung der Systemgrundimpulsantworten, die Bestimmung der Filterkoeffizienten für zumindest ein Transversalfilter während der Auswertung von Meßsequenzen, die Detektion von datentragenden Teilen der Abtastwerte in einem ein- oder mehrstufigen Transversalfilter und die Dekodierung der Ergebnisse des Ausgangs des Transversalfilters.

Ein diskontinuierliches Transversalfilter nach FIG 3 nimmt die Verarbeitung der Abtastwerte der datentragenden Teile vor. Das Transversalfilter wird diskontinuierlich betrieben, da eine Abtastung der Systemgrundimpulsantworten mit einem höheren Takt als der Grundimpulsfolgetakt erfolgt. Nach einer Filteroperation erfolgt eine Weitertaktung des Schieberegisters um eine Anzahl von Abtastwerten entsprechend der Überabtastung der Systemgrundimpulsantworten, so daß sich ein Versetzen der Abtastwerte um einen Grundimpulsfolgetakt ergibt. Die einzelnen im Schieberegister gespeicherten Abtastwerte werden mit den bestimmten Filterkoeffizienten bewertet und summiert. Das Ergebnis der Summation ist eine Folge der komplexen Modulationsfaktoren mit denen die Grundimpulse auf der Sendeseite beaufschlagt wurden. Das Ergebnis am Ausgang des diskontinuierlich arbeitenden Transversalfilters ist die Folge der Modulationsfaktoren mit denen aufeinanderfolgende Grundimpulse im Sender beaufschlagt wurden. Entsprechend der Kodierung auf der Sendeseite ist nun noch eine Dekodierung dieser Werte auf der Empfangsseite vorzunehmen. Dies kann beispielsweise durch eine BPSK, QPSK, GMSK uwsw. durchgeführt werden, deren Bedeutung auch an eine Auswahl der Grundimpulse gekoppelt sein kann.

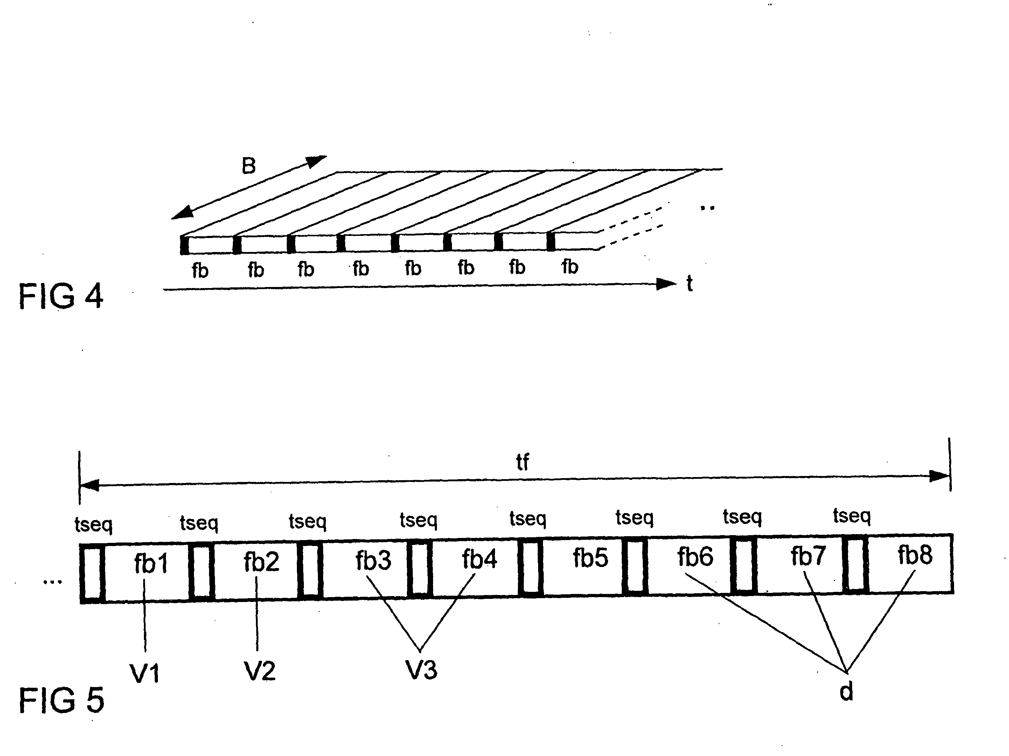

Die Struktur einer beispielshaften Funkschnittstelle ist aus der FIG 4 ersichtlich. Gemäß einem Zeitmultiplexverfahren ist jeweils ein Frequenzbereich in mehrere Funkblöcke fb aufgeteilt, wobei jeder Funkblock fb innerhalb des Frequenzbereiches B einen Frequenzkanal bildet. Innerhalb der Frequenzkanäle, die zur Datenübertragung vorgesehen sind, werden Informationen mehrerer Verbindungen in Funkblöcken übertragen. Gemäß einer FDMA (Frequency Division Multiple Access)-Komponente sind dem Funk-Kommunikationssystem weiterhin mehrere Frequenzbereiche B zugeordnet.

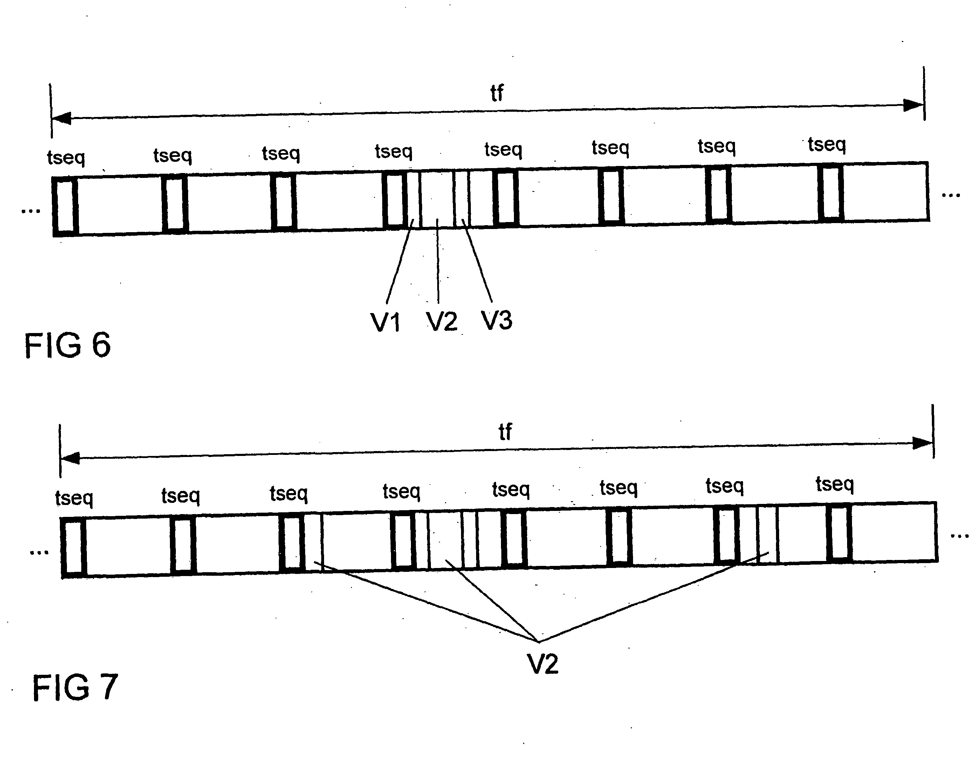

Nach FIG 5 können innerhalb eines Frequenzbereiches B die aufeinanderfolgenden Funkblöcke fb nach einer Rahmenstruktur gegliedert werden. So werden beispielsweise acht Funkblöcke fb1 bis fb8 zu einem Zeitrahmen tf zusammengefaßt, wobei ein bestimmter Funkblock fb des Zeitrahmens tf einen Frequenzkanal zur Datenübertragung bildet und wiederkehrend von einer oder mehreren Kommunikationsverbindungen genutzt werden kann. Weitere Frequenzkanäle, beispielsweise zur Frequenz- oder Zeitsynchronisation der Funkstationen MS werden nicht in jedem Zeitrahmen tf, jedoch zu vorgegebenen Zeitpunkten innerhalb eines den Zeitrahmen tf übergeordneten Multirahmens eingeführt. Die Abstände zwischen diesen Frequenzkanälen bestimmen die Kapazität, die das Funk-Kommunikationssystem dafür zur Verfügung stellt.

In dem Zeitrahmen tf in der FIG 5 sind periodisch Trainingssequenzen tseq angeordnet. Zwischen den Trainingssequenzen tseq sind die Funkblöcke fb1 bis fb8 mit darin übertragenen Daten d angeordnet, so daß nach jeweils einer Trainingssequenz tseq ein Funkblock fb1 bis fb8 folgt. Diese Anordnung steht im Gegensatz zu der Anordnung der Trainingssequenzen in einem Zeitrahmen eines nach einem TDMA-Teilnehmerseparierungsverfahren operierenden GSM-Mobilfunksystems, bei dem jeweils eine Trainingssequenz symmetrisch in einem Funkblock angeordnet ist. Mittels der Trainingssequenzen tseq stellt die Funkstation MS die Übertragungsverhältnisse auf der Funkschnittstelle fest und führt eine Entzerrung der nach FIG 1 in der ersten Kommunikationsverbindung V1 in dem ersten Funkblock fb1 übertragenen Daten d mit der in der FIG 2 beschriebenen Anordnung durch.

Die erfindungsgemäße Anordnung der Trainingssequenzen tseq und der Funkblöcke fb1 bis fb8 besitzt unter anderem den bereits erläuterten Vorteil, daß die empfangende Funkstation MS in einfacher Weise auf mehrere Trainingssequenzen tseq für die Feststellung der Übertragungsverhältnisse auf der Funkstrecke zurückgreifen kann. Dieser Zugriff auf mehrere Trainingssequenzen tseq kann weiterhin dadurch vereinfacht werden, daß die Trainingssequenzen tseq von der Basisstation BS mit einer höheren Sendeleistung als die Daten d in den Funkblöcken fb1 bis fb8 gesendet werden. Ein derartiges, beispielsweise permanentes, "Monitoring" der Übertragungsverhältnisse auf der Funkschnittstelle ist in dem GSM-Mobilfunksystem nicht möglich, da die in den Funkblöcken eingebetteten Trainingssequenzen mit der gleichen Sendeleistung wie die Daten d in den Funkblöcken fb gesendet werden. Durch eine unterschiedliche Regelung der Sendeleistung in den Funkblöckenb fb, die abhängig von dem Aufenthaltsort der jeweiligen Funkstation MS durchgeführt wird, würden Messungen der Funkstation MS, die mehrere Trainingssequenzen tseq in Funkblöcken fb mit Kommunikationsverbindungen zu anderen Funkstationen für eine Kanalschätzung zugrunde legt, verfälscht werden.

In den FIG 5, 6 und 7 sind beispielhaft drei verschiedene Konfigurationsmöglichkeiten der Zuteilung von Kommunikationsverbindungen zu Funkblöcken fb dargestellt. In der FIG 5 sind drei Kommunikationsverbindungen V1, V2 und V3 angegeben, die von der Funkstation MS und von mehreren weiteren Funkstationen MS geführt werden. Jeder Kommunikationsverbindung V1, V2 bzw. V3 können ein oder mehrere Funkblöcke fb1 bis fb8 zur Übertragung von Daten d zugewiesen werden. In dem dargestellten Beispiel der FIG 5 sind den Kommunikationsverbindungen V1 und V2 jeweils ein kompletter Funkblock fb1 bzw. fb2 zuteilt, während die Daten d der Kommunikationsverbindung V3 in zwei Funkblöcken fb3 und fb4 in dem Zeitrahmen tf übertragen werden.

Die FIG 6 stellt eine nächste Konfigurationsmöglichkeit dar. Hierbei sind die Funkblöcke fb1 bis fb8 nicht starr nur jeweils einer der Kommunikationsverbindungen V1, V2, V3 zugeteilt, sondern in einem Funkblock fb1 bis fb8 werden Daten d mehrerer Kommunikationsverbindungen V1, V2, V3 in jeweils einem Zeitrahmen tf übertragen. Wie aus der Zeichnung ersichtlich, kann dabei auch die jeweilige Datenrate, d.h. die Anzahl der Daten d, die den Kommunikationsverbindungen V1, V2, V3 zur Verfügung gestellt wird, variieren. Der Kommunikationsverbindung V2 ist dabei beispielsweise eine höhere Datenrate als den Kommunikationsverbindungen V1 und V3 zugeteilt. Eine derartige Zuteilung kann entsprechend der benötigten Übertragungskapazität in den Zeitrahmen tf für die Auf- und Abwärtsrichtung unterschiedlich ausfallen.

Wird von einem Teilnehmer auf der Kommunikationsverbindung V2 beispielsweise eine Internetanwendung ausgeführt, bei der Daten d in Form von Datenpaketen übertragen werden, so wird in der Regel auf der Abwärtsstrecke von der Basisstation BS zu der Funkstation MS eine weit höhere Datenrate für die Übertragung der Datenpakete als auf der Aufwärtsstrecke benötigt, so daß dieser Kommunikationsverbindung V2 demnach auf der Abwärtsstrecke eine weit höhere Datenrate als in der Aufwärtsrichtung zugeteilt werden muß. Dagegen werden bei verbindungsorientierten Kommunikationsverbindungen, wie beispielsweise Sprachübertragung bei einem Telefongespräch, in der Ab- und Aufwärtsrichtung gleiche Datenraten benötigt, so daß die Zuteilung innerhalb eines Funkblockes fb in den Zeitrahmen tf für die Abwärts- und Aufwärtsstrecke orthogonal erfolgen kann.

Bei der Paketdatenübertragung, aber auch bei einer verbindungsorientierten Kommunikationsverbindung, können nach der Erfindung Pausen bei der Übertragung der ersetn Kommunikationsverbindung V1, die beispielsweise einen oder mehrere Zeitrahmen tf andauern, dazu verwendet werden, Daten d der anderen Kommunikationsverbindungen V2 und V3 dynamisch in dem oder den vollständig oder teilweise freigewordenen Funkblökken fb1 bis fb8 zu übertragen.

Die FIG 7 stellt schließlich eine weitere Konfigurationsmöglichkeit der Zuteilung der Kommunikationsverbindung V2 zu den Funkblöcken fb1 bis fb8 dar. In diesem Fall werden die Daten d der Kommunikationsverbindung V2 nicht nur in einem Funkblock fb, sondern in mehreren Funkblöcken fb3, fb4 und fb7 übertragen. Die Anordnung der zu der Kommunikationsverbindung V2 zugehörigen Daten d innerhalb der Funkblöcke fb3, fb4 und fb7 kann dabei flexibel an unterschiedlichen Stellen und mit unterschiedlichen Kapazitäten erfolgen.

## Patentansprüche

1. Verfahren zur Übertragung von Daten über eine Funkschnittstelle in einem als ein Mobilfunksystem ausgestalteten Funk-Kommunikationssystem, bei dem Daten (d) von zumindest einer Kommunikationsverbindung (V1, V2, V3) gemäß einem in Zeitrahmen (tf) organisierten Zeitmultiplex-Verfahren in Funkblöcken (fb) in Abwärtsrichtung von einer Basisstation (BS) zu zumindest einer Funkstation (MS) gesendet werden,
innerhalb eines Zeitrahmens (tf) periodisch Trainingssequenzen (tseq) gesendet werden, und nach einer jeweiligen Trainingssequenz (tseq) der Funkblock (fb) zumindest einer der Kommunikationsverbindungen (V1, V2, V3) gesendet wird, **dadurch gekennzeichnet, daß** die Trainingssequenzen (tseq) mit einer im Vergleich zu einer mittleren Sendeleistung für die Funkblöcke (fb) höheren und konstanten Sendeleistung gesendet werden.

2. Verfahren nach Anspruch 1,
**dadurch gekennzeichnet, daß**
die Funkstation (MS) eine Interpolation und/oder eine Extrapolation von Kanalschätzungen aus zumindest zwei der Trainingssequenzen (tseq) durchführt.

3. Verfahren nach Anspruch 1 oder 2,
**dadurch gekennzeichnet, daß**
die Daten (d) einer ersten Kommunikationsverbindung (V1) zu der Funkstation (MS) und von weiteren Kommunikationsverbindungen (V2..) zu weiteren Funkstationen in einem Funkblock (fb) zusammengefaßt werden.

4. Verfahren nach Anspruch 3,
**dadurch gekennzeichnet, daß**
die Anzahl der Daten (d) jeweils der ersten (V1) und der weiteren Kommunikationsverbindungen (V2...) innerhalb eines Funkblocks (fb) in Abhängigkeit von einer benötigten Übertragungskapazität variiert wird.

5. Verfahren nach Anspruch 3 oder 4,
**dadurch gekennzeichnet, daß**
bei Übertragungspausen während der ersten Kommunikationsverbindung (V1) nicht genutzte Übertragungskapazität in einem Funkblock (fb) dynamisch von einer oder mehreren weiteren Kommunikationsverbindungen (V2...) zur Übertragung von Daten (d) genutzt wird.

6. Verfahren nach einem der vorhergehenden Ansprüche,
**dadurch gekennzeichnet, daß**
die Länge der Trainingssequenzen (tseq) jeweils im Vergleich zu einer auf eine übliche Mehrfachausbreitung ausgelegten Trainingssequenz (tseq) verkürzt wird, und die freiwerdende Übertragungskapazität zusätzlich für die Übertragung der Daten (d) oder für einen Fehlerschutz verwendet wird.

7. Verfahren nach einem der vorhergehenden Ansprüche,
**dadurch gekennzeichnet, daß**
die Trainingssequenzen (tseq) auf allen Frequenzkanälen der Funkschnittstelle gleichzeitig gesendet werden.

8. Verfahren nach einem der vorhergehenden Ansprüche,
**dadurch gekennzeichnet, daß**
die Daten (d) der ersten Kommunikationsverbindung (V1) jeweils mit zumindest einem Kode für unterschiedliche Datenabschnitte versehen werden.

9. Basisstation (BS) zur Übertragung von Daten über eine Funkschnittstelle in einem als ein Mobilfunksystem ausgestalteten Funk-Kommunikationssystem, mit Mitteln zum Senden der Daten (d) von zumindest einer Kommunikationsverbindung (V1, V2, V3) gemäß einem in Zeitrahmen (tf) organisierten Zeitmultiplex-Verfahren in Funkblöcken (fb) in Abwärtsrichtung zu zumindest einer Funkstation (MS), mit Mitteln (IM) zum periodischen Einfügen von Trainingssequenzen (tseq) in einen jeweiligen Zeitrahmen (tf) und **gekennzeichnet durch** eine Sendeeinrichtung (SE) zum Senden der Trainingssequenzen (tseq) mit einer im Vergleich zu einer mittleren Sendeleistung für die Funkblöcke (fb) höheren und konstanten Sendeleistung und zum Senden des Funkblocks (fb) zumindest einer der Kommunikationsverbindungen (V1, V2, V3) nach einer jeweiligen Trainingssequenz (tseq).

## Claims

1. Method for transmitting data over a radio interface in a radio communications system which is embodied as a mobile radio system, in which data (d) from at least one communications link (V1, V2, V3) are transmitted in the downlink direction from a base station (BS) to at least one radio station (MS) in radio blocks (fb) in accordance with a time division multiplex method which is organized in time frames (tf), within a time frame (tf), training sequences (tseq) are transmitted in periodic fashion and after a respective training sequence (tseq) the radio block (fb) of at least one of the communications links (V1, V2, V3) is transmitted, **characterized in that** the training sequences (tseq) are transmitted with a constant transmission power which is higher than an average transmission power for the radio blocks (fb).

2. Method according to Claim 1, **characterized in that** the radio station (MS) carries out an interpolation and/or an extrapolation of the channel estimation from at least two training sequences (tseq).

3. Method according to Claim 1 or 2, **characterized in that** the data (d) of a first communications link (V1) to the radio station (MS) and from other communications links (V2..) to other radio stations are combined in a radio block (fb).

4. Method according to Claim 3, **characterized in that** the amount of data (d) of the respective first communications link (V1) and of the other communications links (V2...) is varied within a radio block (fb) as a function of a required transmission capacity.

5. Method according to Claim 3 or 4, **characterized in that**, in transmission pauses during the first communications link (V1), the unused transmission capacity in a radio block (fb) is used dynamically by one or more other communications links (V2...) for transmitting data (d).

6. Method according to one of the preceding claims, **characterized in that** the length of the training sequences (tseq) is shortened in each case in comparison with a training sequence (tseq) which is configured for a customary multiple propagation, and the transmission capacity which becomes free is additionally used for transmitting the data (d) or for error protection.

7. Method according to one of the preceding claims, **characterized in that** the training sequences (tseq) are transmitted simultaneously on all the frequency channels of the radio interface.

8. Method according to one of the preceding claims, **characterized in that** the data (d) of the first communications link (V1) are each provided with at least one code for different data sections.

9. Base station (BS) for transmitting data over a radio interface in a radio communications system which is embodied as a mobile radio system, having means for transmitting the data (d) of at least one communications link (V1, V2, V3) in the downlink direction to at least one radio station (MS) in radio blocks (fb) in accordance with a time division multiplex method organized in time frames (tf), having means (IM) for periodically inserting training sequences (tseq) into a respective time frame (tf) and **characterized by** a transmitter device (SE) for transmitting the training sequences (tseq) with a constant transmission power which is higher than an average transmission power for the radio blocks (fb), and for transmitting the radio block (fb) of at least one of the communications links (V1, V2, V3) according to a respective training sequence (tseq).

## Revendications

1. Procédé destiné à la transmission de données à travers une interface radio dans un système de communication par radio conçu comme système de radio mobile, dans lequel des données (d), provenant d'au moins une liaison de communication (V1, V2, V3), sont envoyées, conformément à un procédé de multiplex temporel organisé en trames temporelles (tf), en blocs radio (fb) dans le sens descendant d'une station de base (BS) à au moins une station radio (MS), des séquences d'entraînement (tseq) sont envoyées périodiquement à l'intérieur d'une trame temporelle (tf) et, après chacune des séquences d'entraînement (tseq), le bloc radio (fb) est envoyé à au moins l'une des liaisons de communication (V1, V2, V3),
**caractérisé par le fait**
**que** les séquences d'entraînement (tseq) sont émises avec une puissance d'émission constante et supérieure à une puissance moyenne d'émission pour les blocs radio (fb).

2. Procédé selon la revendication 1
**caractérisé par le fait**
**que** la station radio (MS) exécute, à partir d'au moins deux des séquences d'entraînement (tseq), une interpolation et/ou une extrapolation d'évaluations du canal.

3. Procédé selon la revendication 1 ou 2
**caractérisé par le fait**
**que** les données (d) d'une première liaison de communication (V1) vers la station radio (MS) et d'autres liaisons de communication (V2, ...) vers d'autres stations radio sont assemblées dans un bloc radio (fb).

4. Procédé selon la revendication 3
**caractérisé par le fait**
**que** le nombre de données (d) respectives de la première (V1) et des autres liaisons de communication (V2, ...) varie à l'intérieur d'un bloc radio (fb) en fonction d'une capacité de transmission requise.

5. Procédé selon la revendication 3 ou 4
**caractérisé par le fait**
**qu'**une capacité de transmission, non utilisée lors de pauses de transmission pendant la première liaison de communication (V1), est utilisée dynamiquement dans un bloc radio (fb) par une ou plusieurs autres liaisons de communication (V2, ...) pour la transmission de données (d).

6. Procédé selon l'une des revendications précédentes
**caractérisé par le fait**
**que** la longueur des séquences d'entraînement (tseq) est raccourcie dans chaque cas par rapport à une séquence d'entraînement (tseq) dimensionnée pour une propagation multiple habituelle et la capacité de transmission ainsi libérée est utilisée en supplément pour la transmission des données (d) ou pour une protection contre les erreurs.

7. Procédé selon l'une des revendications précédentes
**caractérisé par le fait**
**que** les séquences d'entraînement (tseq) sont émises simultanément sur tous les canaux de fréquence de l'interface radio.

8. Procédé selon l'une des revendications précédentes
**caractérisé par le fait**
**que** les données (d) de la première liaison de communication (V1) sont, dans chaque cas, pourvues d'au moins un code pour des sections de données différentes.

9. Station de base (BS), destinée à la transmission de données à travers une interface radio dans un système de communication par radio conçu comme système de radio mobile, ayant des moyens pour émettre les données (d) provenant d'au moins une liaison de communication (V1, V2, V3), conformément à un procédé de multiplex temporel organisé en trames temporelles (tf), en blocs radio (fb) dans le sens descendant vers au moins une station radio (MS), ayant des moyens (IM) destinés à l'insertion périodique de séquences d'entraînement (tseq) dans une trame temporelle (tf) respective et **caractérisée par** un dispositif émetteur (SE) destiné à émettre les séquences d'entraînement (tseq) avec une puissance d'émission constante et supérieure à une puissance moyenne d'émission pour les blocs radio (fb) et destiné à émettre le bloc radio (fb), après chacune des séquences d'entraînement (tseq), à au moins l'une des liaisons de communication (V1, V2, V3).
